# EUROPEAN PATENT APPLICATION

(11) **EP 4 431 055 A1**
(43) Date of publication of application: **18.09.2024**
(21) Application number: 22891678.9
(22) Date of filing: 27.09.2022
(51) Int. Cl.: A61C 17/34

(54) **CLEANING AND CARE APPLIANCE**

(30) Priority: 11.11.2021 CN 202111331795
(71) Applicant: Shanghai Shift Electrics Co., Ltd., Shanghai 201506 (CN)
(72) Inventor: DAI, Xiaoguo, Shanghai 201506 (CN); XU, Zhenwu, Shanghai 201506 (CN)
(74) Representative: WSL Patentanwälte Partnerschaft mbB
(86) International application number: PCT/CN2022/121612
(87) International publication number: WO 2023/082876

(57) **Abstract**

The present invention discloses a cleaning and caring appliance, comprising: a housing; a motor, which performs a rotational motion; a drive shaft, which has a second axis and extends out of a chamber; and a connecting rod mechanism, which is connected to both an output shaft of the motor and the drive shaft and is configured to convert the rotational motion of the output shaft around a first axis into reciprocating rotation of the drive shaft around the second axis, the connecting rod mechanism comprising a driving wheel connected to the output shaft; wherein the cleaning and caring appliance comprises a frame arranged adjacent to the motor in the housing, the frame comprising a frame bottom wall and a first boss and a second boss which protrude from the frame bottom wall, the driving wheel being accommodated in a first boss cavity of the first boss, the drive shaft being accommodated in a hole portion of the second boss to perform reciprocating rotation, and the second boss being overlapped above the first boss such that the hole portion is located directly above the first boss cavity. The frame is provided with the two overlapping bosses for mounting the connecting rod mechanism and the drive shaft, thereby providing a compact arrangement structure.

## Description

### Technical Field

The present invention relates to a cleaning and caring appliance, such as an electric toothbrush, and in particular to a cleaning and caring appliance, such as an electric toothbrush, provided with a connecting rod mechanism that converts a rotational motion of a drive device into reciprocating rotation of a drive shaft.

### Background Art

At present, various hand-held electric cleaning and caring appliances, such as an electric toothbrush, are available on the market. The electric toothbrush includes a handle and a brush head which is attached to a drive shaft extending from the handle. A rotating motor is mounted inside the handle. A drive force provided by the rotating motor is output by means of an output shaft of the rotating motor, and is converted into reciprocating rotation of the drive shaft by means of a planar four-connecting-rod structure so as to enable the brush head on the drive shaft to swing in a reciprocating motion.

In an existing electric toothbrush using a motor as a drive device, the longitudinal axis of the rotating motor and the longitudinal axis of the drive shaft directly attached to the brush head are in parallel and offset from each other by an offset distance that is usually 5 mm or more. In this case, in order to reduce the volume of product, the brush head of the electric toothbrush is eccentrically arranged relative to the central longitudinal axis of the handle.

However, due to the limitations of the existing planar four-connecting-rod structure and the mounting structure of the drive shaft, the overall contour of the existing motor-driven electric toothbrush is relatively large, and the appearance design is limited by the offset of the brush head relative to the central longitudinal axis of the handle.

Therefore, it is still necessary to improve the existing electric cleaning and caring appliance having a motor drive device, to reduce the volume and also improve the appearance design aesthetics.

### Summary of the Invention

In order to overcome the shortcomings in the prior art, the present invention provides a cleaning and caring appliance. The cleaning and caring appliance includes: a housing, in which a chamber is formed; a motor, which includes an output shaft having a first axis, the output shaft performing a rotational motion, the motor being arranged in the chamber, and a driving wheel being provided on the output shaft; a drive shaft, which has a second axis and extends out of the chamber; and a connecting rod mechanism, which is connected to both the driving wheel of the output shaft and the drive shaft and is configured to convert the rotational motion of the output shaft around the first axis into reciprocating rotation of the drive shaft around the second axis; wherein the cleaning and caring appliance includes a frame arranged adjacent to the motor in the housing, the frame including a frame bottom wall and a first boss and a second boss which protrude from the frame bottom wall, the drive shaft being accommodated in a first boss cavity formed by the first boss, the second boss being provided with a hole portion, the drive shaft being accommodated in the hole portion to perform the reciprocating rotation, and the second boss being overlapped above the first boss such that the hole portion is located above the first boss cavity.

According to another aspect of the present invention, the second boss is overlapped above the first boss, such that the first axis of the output shaft is substantially aligned with the second axis of the drive shaft. That is, the longitudinal axis of the output shaft and the longitudinal axis of the drive shaft are in a straight line, or are in parallel and offset from each other by a distance of less than 1 mm, and a distal end of the drive shaft is located directly above the output shaft.

With this positional relationship between the drive shaft and the output shaft, the size of a handle portion is reduced, avoiding the offset of the brush head relative to the handle portion, and making the appearance design more flexible.

Owing to the frame having the two overlapping bosses, both the output shaft and the drive shaft can be retained by means of one frame when the axis of the output shaft of the motor is substantially aligned with the axis of the drive shaft.

According to a further aspect of the present invention, a boss hole bottom is provided between the first boss and the second boss, the boss hole bottom abuts against an end of the drive shaft, and the boss hole bottom is integrally formed with at least one of the first boss and the second boss.

According to a further aspect of the present invention, a driving wheel is provided on the output shaft of the motor, and at least part of the driving wheel is accommodated in the first boss cavity. The connecting rod mechanism further includes: a driven wheel, which is in gear engagement with the driving wheel; a driven wheel eccentric rod connected to the driven wheel, with a central axis of the driven wheel eccentric rod being eccentrically arranged relative to an axis of rotation of the driven wheel; a connecting rod, which has one end connected to the driven wheel eccentric rod; a drive shaft eccentric rod connected to the other end of the connecting rod; and a drive shaft connection rod, which has one end connected to the drive shaft eccentric rod and the other end fixed to the drive shaft.

According to a further aspect of the present invention, the first boss includes a first boss wall circumferentially surrounding the driving wheel, the first boss wall including a notch portion where the driven wheel engages with the driving wheel.

According to a further aspect of the present invention, the other end of the drive shaft connection rod is fixed to the drive shaft above the second boss.

According to a further aspect of the present invention, the frame further includes a frame outer wall which extends from and is integrally formed with the frame bottom wall and surrounds the connecting rod mechanism, wherein the frame bottom wall is provided with a first opening between the first boss and the outer wall, and the first opening accommodates one end of the driven wheel eccentric rod.

According to a further aspect of the present invention, the second boss is formed separately from the first boss, and the second boss is snap-fitted onto the first boss.

According to a further aspect of the present invention, the frame bottom wall is provided with a boss bottom hole on one side of the first boss close to the motor, and the output shaft of the motor extends into the first boss cavity through the boss bottom hole.

According to a preferred embodiment of the present invention, the frame is provided with the two overlapping bosses for mounting the connecting rod mechanism and the drive shaft, thereby providing a compact arrangement structure. According to the present invention, it is particularly advantageous that the longitudinal axis of the brush head and the longitudinal axis of the handle of the electric toothbrush can be substantially in a straight line, and the drive shaft is kept substantially aligned with the output shaft of the motor by means of one frame, achieving accurate positioning and convenient installation.

### Brief Description of the Drawings

For a more complete understanding of the present invention, the following description of exemplary embodiments can be considered with reference to the drawings, in which:
FIG. 1 shows a perspective view of an electric toothbrush according to a preferred embodiment of the present invention.
FIG. 2 shows a perspective view of an internal structure of the electric toothbrush shown in FIG. 1 according to a preferred embodiment of the present invention, in which part of a handle housing is removed.
FIG. 3 shows a front view of a connecting rod mechanism according to a preferred embodiment of the present invention.
FIG. 4 shows a perspective view of a motor and the connecting rod mechanism according to a preferred embodiment of the present invention.
FIG. 5 shows a perspective view of the connecting rod mechanism according to a preferred embodiment of the present invention, schematically showing a four-connecting-rod structure.
FIG. 6 shows a perspective view of a frame that accommodates the connecting rod mechanism according to a preferred embodiment of the present invention.
FIG. 7 shows another perspective view of the frame that accommodates the connecting rod mechanism according to a preferred embodiment of the present invention, in which a drive shaft is attached to the frame.

### Detailed Description of Embodiments

The present invention will be further described below with reference to specific embodiments and drawings, and more details are set forth in the following description to facilitate a full understanding of the present invention. However, the present invention can obviously be implemented in many other ways than as described herein, and those skilled in the art can make similar promotions and deductions based on practical applications without departing from the essence of the present invention. Therefore, the scope of protection of the present invention should not be limited to the content of the specific embodiments.

Exemplary embodiments of the present invention will be described in more detail below with reference to the drawings, taking an electric toothbrush 100 as a typical example of a personal cleaning and caring appliance. Although the following explanation is provided by only taking the electric toothbrush 100 as an example, the present invention is not limited thereto. The present invention is also applicable to electric shavers, electric facial cleaners, electric showers and other cleaning and caring appliances that can provide cleaning actions by means of a drive device.

For the sake of clarity, the words such as "proximal end/side" and "distal end/side" expressing relative positions in space are used in this specification to simply describe the relationship between an element or a feature and further element(s) or feature(s) as shown in the figures. "Proximal end/side" refers to an end or a side close to the position where a cleaning action force acts when the cleaning and caring appliance is in use; and "Distal end/side" refers to the end or side away from the position where the cleaning action force acts when the cleaning and caring appliance is in use.

In addition, the word "and/or" used in the present application includes any and all combinations of one or more of the listed associated words.

Although the words such as "first" are used in this specification to describe multiple elements or components, these elements or components should not be limited by these words. These words are only used to distinguish one element or component from another element or component and do not include a "sequence". Therefore, the ordinal numbers of the elements or components discussed below can be interchanged without departing from the concept and scope of the present invention.

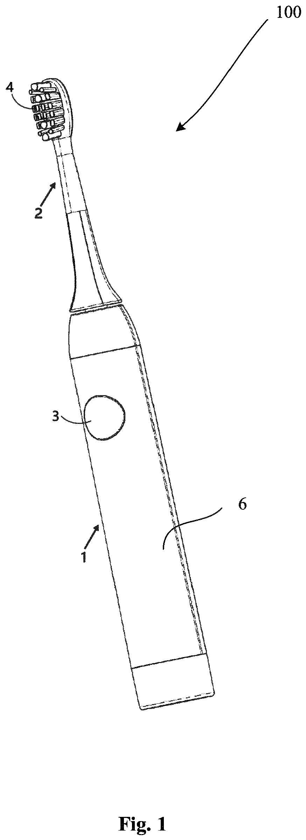

FIG. 1 shows a perspective view of a cleaning and caring appliance according to a preferred embodiment of the present invention. the cleaning and caring appliance is an electric toothbrush 100.

The electric toothbrush 100 mainly includes a handle portion 1 and a brush head 2 detachably mounted on the handle portion 1. The handle portion 1 includes a handle housing 6 and functional components mounted in the handle housing 6. The brush head 2 is provided with a cleaning element 4, such as bristles. A switch portion 3 is arranged in the middle of the handle housing 6 slightly close to a proximal side. When a user presses the switch portion 3, the functional components inside the electric toothbrush 100 can be powered to enable the brush head 2 to reciprocate.

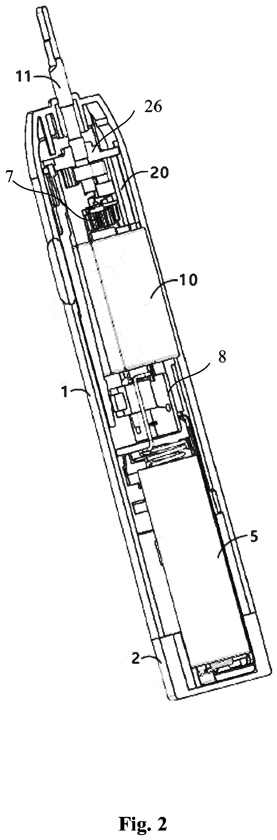

FIG. 2 further shows an internal structure of the electric toothbrush 100 according to a preferred embodiment of the present invention. As shown in FIG. 2, the electric toothbrush 100 includes, from a distal end to a proximal end in a longitudinal direction of the electric toothbrush 100, a battery 5, a circuit board 8, a motor 10, a connecting rod mechanism 7 and a drive shaft 11, which are arranged in a chamber formed by the handle housing 6. In addition, as shown in FIG. 2, the handle housing 6 is internally provided with a frame 20 that accommodates and retains the connecting rod mechanism 7 and the drive shaft 11 as well as a frame cover 26 that is assembled with the frame 20 on a proximal side of the frame 20.

In a preferred embodiment, the battery 5 is arranged on a distal side of the chamber of the handle portion 1 to supply power for the motor 10 of the electric toothbrush 100. The circuit board 8 is arranged between the battery 5 and the motor 10, and is provided with a switch and related control devices. The circuit board 8 is arranged at a distal side of the motor 10, and the output shaft of the motor 10 extends toward the connecting rod mechanism 7 on the proximal side of the motor 10. The output shaft can rotate around its longitudinal axis L₂ (a first axis) when the motor 10 is actuated. The connecting rod mechanism 7 is configured to be connected to both the driving wheel 16 on the output shaft of the motor 10 and the drive shaft 11, for converting the rotational motion of the output shaft into reciprocating rotation of the drive shaft 11 around its longitudinal axis Li (a second axis). At a proximal end of the handle housing 6 of the electric toothbrush 100, the drive shaft 11 connected to the connecting rod mechanism 7 partially extends out of the chamber formed by the handle housing 6 of the handle so as to connect the brush head 2.

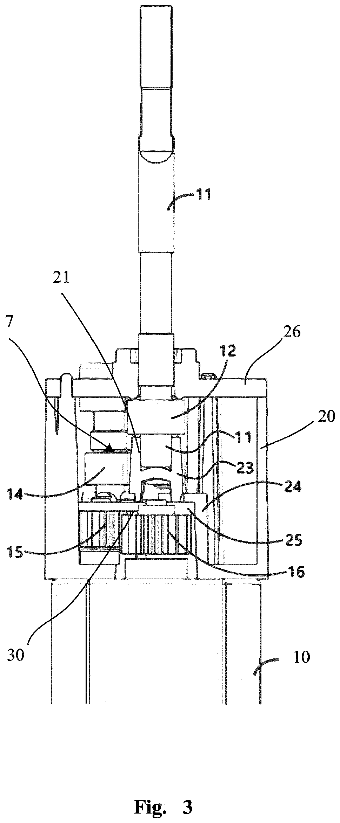

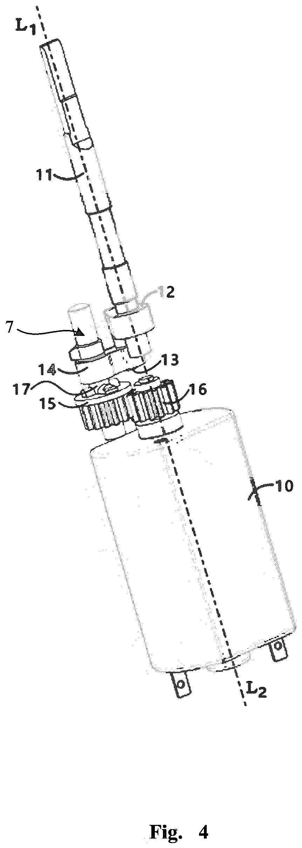

FIG. 3 shows a plan view of the connecting rod mechanism 7 according to a preferred embodiment of the present invention, and FIG. 4 shows a perspective view of the motor 10 and the connecting rod mechanism 7 according to a preferred embodiment of the present invention. As shown in FIGS. 3 and 4, the connecting rod mechanism 7 includes a driven wheel 15, a driven wheel eccentric rod 17, a connecting rod 14, a drive shaft eccentric rod 13 and a drive shaft connection rod 12, which form a four-connecting-rod mechanism.

Specifically, in a preferred embodiment, the driving wheel 16 is a cylindrical gear which is mounted on the output shaft of the motor 10, the axis of rotation of the driving wheel 16 is in line with the longitudinal axis L₂ of the output shaft, and the output shaft of the motor 10 rotates to drive the driving wheel 16 to rotate. The driven wheel 15 is also a cylindrical gear which engages with the driving wheel 16, and the axis of rotation of the driven wheel 15 is parallel to but separated from the axis of rotation of the driving wheel 16 by a certain distance. The driven wheel eccentric rod 17 in the connecting rod mechanism 7 is arranged substantially in the longitudinal direction, and the driven wheel eccentric rod 17 is connected to both the driven wheel 15 and the connecting rod 14.

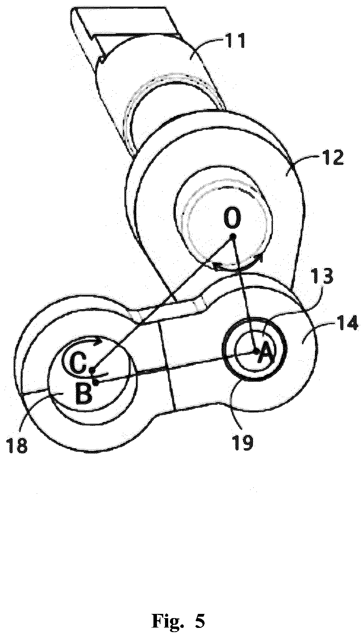

The connecting rod 14 is arranged transversely to the longitudinal direction, and is connected to both the driven wheel eccentric rod 17 and the drive shaft eccentric rod 13. As shown in FIG. 5, the connecting rod 14 is provided with a first hole 18 and a second hole 19; one end of the driven wheel eccentric rod 17 is inserted into the first hole 18, and the center of the first hole 18 is offset relative to the center of rotation of the driven wheel 15; and the driven wheel eccentric rod 17 is configured to connect the center-biased first hole 18 and the driven wheel 15, thus forming a drive arm of the planar four-connecting-rod mechanism.

The drive shaft eccentric rod 13 is connected to both the connecting rod 14 and the drive shaft connection rod 12. The distal end of the drive shaft eccentric rod 13 is inserted into the second hole 19 of the connecting rod 14. The drive shaft eccentric rod 13 is also arranged substantially in the longitudinal direction and is offset to one side of the drive shaft 11.

The drive shaft connection rod 12 is connected to both the drive shaft eccentric rod 13 and the drive shaft 11. Similar to the connecting rod 14, the drive shaft connection rod 12 is also provided with a first hole and a second hole separated by a certain distance, the drive shaft eccentric rod 13 being inserted into the first hole, and the distal end of the drive shaft 11 being inserted through the second hole.

In particular, as shown in FIGS. 3 and 4, in the present invention, the central axis of the second hole of the drive shaft connection rod 12 of the connecting rod mechanism 7 is substantially aligned with the axis of rotation of the driving wheel 16, that is, the longitudinal axis Li of the drive shaft 11 inserted into the second hole is substantially aligned with the longitudinal axis of the output shaft connected to the motor 10. It should be particularly noted that, in the present invention, one axis being "substantially aligned" with another axis means that the two axes are in a straight line or are in parallel and offset by a distance of less than 1 mm.

FIG. 5 shows a schematic diagram of a four-connecting-rod device composed of the connecting rod mechanism 7 described above. In FIG. 5, point O is the center of the drive shaft 11, point A is the center of the second hole of the connecting rod 14, point B is the center of the first hole of the connecting rod 14, i.e., the position of the central axis of the driven wheel eccentric shaft, and point C is the center of rotation of the driven wheel 15. The output shaft of the motor 10 rotates to drive the driving wheel 16 to rotate, the driving wheel 16 engages with and drives the driven wheel 15 to rotate around the point C, the driven wheel 15 is fixed to the driven wheel eccentric rod 17, and the driven wheel 15 rotates to drive the driven wheel eccentric rod 17 to rotate around the point C. Since the center point B of the first hole of the connecting rod 14 is offset relative to the point C, and the position of the point O is fixed, as the driven wheel eccentric rod 17 rotates around the point C, the driven wheel eccentric rod 17 rotates to drive the connecting rod 14, the drive shaft eccentric rod 13 and the drive shaft connection rod 12 to perform reciprocating rotation around the point C, so as to drive the drive shaft 11 to reciprocate around the point O, so as to allow the brush head 2 mounted on the drive shaft 11 to reciprocate. In summary, the drive shaft 11, the drive shaft connection rod 12, the connecting rod 14, the driven wheel 15 and the driven wheel eccentric rod 17 form a planar four-connecting-rod structure. As shown in FIG. 5, a connecting line from the center C of the driven wheel 15 to the center of the hole 18 of the connecting rod 14 forms a drive arm of the planar four-connecting-rod structure, and the drive arm may continuously rotate 360 degrees, thus achieving the reciprocating rotation of the drive shaft 11 around the longitudinal axis.

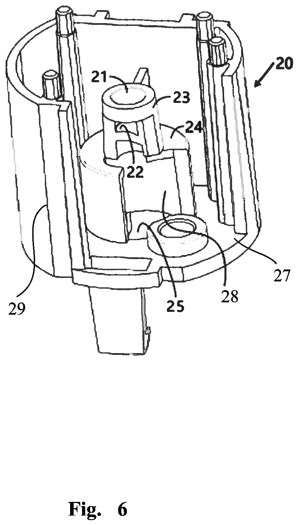

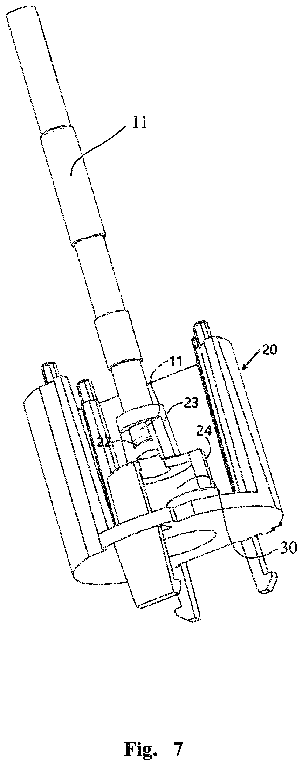

The frame 20 is arranged adjacent to the motor 10 in the housing. In particular, as shown in FIGS. 6 and 7, the frame 20 includes a frame bottom wall, a frame outer wall, and a first boss 24 and a second boss 23 which are arranged inside the frame outer wall and protrude from the frame bottom wall substantially in the longitudinal direction, wherein the first boss 24 includes a first boss wall which encloses a first boss cavity 30, and the second boss 23 includes a second boss wall which encloses a hole portion 21. The first boss cavity 30 mainly accommodates the driving wheel 16, and the driving wheel 16 can rotate in the first boss cavity 30; and the hole portion 21 accommodates an end of the drive shaft 11, and the drive shaft 11 can rotate in the hole portion of the second boss. As shown in FIG. 6, the second boss 23 is overlapped above the first boss 24 in the longitudinal direction, such that the hole portion 21 is located above the first boss cavity 30. Preferably, the hole portion 21 is located directly above the first boss cavity 30, i.e., the entire hole portion 21 is located in a space region longitudinally above the first boss cavity 30, such that the output shaft and the drive shaft 11, of which the axes are substantially aligned, can be retained and accommodated by one frame 20.

As shown in FIG. 3, a boss hole bottom 22 is provided between the first boss 24 and the second boss 23, and an upper surface of the bottom 22 abuts against the end of the drive shaft 11, thereby positioning and supporting the drive shaft 11. In a preferred embodiment according to the present invention, the boss hole bottom 22 is integrally formed with the second boss wall, and thus becomes a portion of the second boss 23. However, it should be understood that in other alternative embodiments, the boss hole bottom may also be integrally formed with the first boss 24, for example, as a portion of the top of the second boss 23. Obviously, the first boss 24 and the second boss 23 may also be integrally formed with the boss hole bottom.

Further, as shown in FIG. 6, the frame bottom wall 27 is provided with a boss bottom hole 25 on one side of the first boss 24 close to the motor 10, and the output shaft of the motor 10 can extend into the first boss cavity 30 through the boss bottom hole 25. As shown in FIG. 3, in a preferred embodiment of the present invention, the diameter of the boss bottom hole 25 is set to be slightly larger than that of the driving wheel 16, and part of the driving wheel 16 extends through the bottom hole 25. It should be understood that in other alternative embodiments, the boss bottom hole 25 may also be set to be smaller to only allow the output shaft of the motor 10 to pass through.

In addition, the first boss wall 28 is particularly provided with a notch portion. As shown in FIGS. 3 and 6, by means of a space provided by the notch portion, the driving wheel 16 located inside the first boss cavity 30 and the driven wheel 15 substantially located outside the boss cavity 30 can engage with each other.

The frame bottom wall 27 and the frame cover 26 are respectively provided with two openings which are preferably located at positions vertically corresponding to each other and respectively receive the proximal end and the distal end of the driven wheel eccentric rod 17 so as to allow the driven wheel eccentric rod 17 to be driven by the driven wheel 15 to rotate.

When the connecting rod mechanism 7 is mounted in the frame 20, the driving wheel 16 mounted on the output shaft of the motor is located in the first boss cavity 30, and the driven wheel 15 is located in a space between the outer side of the first boss cavity 30 and the frame outer wall 29. The connecting rod 14 and the drive shaft eccentric rod 13 are located in a space between the second boss wall and the frame outer wall 29. The drive shaft connection rod 12 extends transversely in the space between the upper portion of the second boss 23 and the lower portion of the frame cover 26, and the end thereof passing through the hole of the drive shaft 11 is located above the second boss 23.

In addition, as shown in FIG. 3, the second boss 23 and the first boss 24 are preferably formed as separate components, and the bottom of the second boss 23 is mounted onto the top of the first boss 24 in a snap-fit manner. It should be understood that in other alternative embodiments, the first boss 24 and the second boss 23 may also be formed as a whole and fixedly assembled with the frame bottom wall. The first boss 24 and the second boss 23 may also be integrally formed with the frame 20 by means of injection molding.

According to a preferred embodiment of the present invention, the frame 20 is provided with the two overlapping bosses for mounting the connecting rod mechanism 7 and the drive shaft 11, thereby providing a compact arrangement structure. According to the present invention, it is particularly advantageous that the longitudinal axis of the brush head 2 and the longitudinal axis of the handle of the electric toothbrush 100 can be substantially in a straight line, and the drive shaft 11 is kept substantially aligned with the output shaft of the motor 10 by means of one frame 20, achieving accurate positioning and convenient installation.

Although the present invention is disclosed as above in terms of the preferred embodiments, they are not intended to limit the present invention, and those skilled in the art could all make possible changes and alterations without departing from the spirit and scope of the present invention. Hence, any alterations, equivalent changes and modifications, which are made to the above embodiments based on the technical essence of the present invention without departing from the content of the technical solutions of the present invention, shall fall within the scope of protection defined by the claims of the present invention.

### List of reference signs

1 Handle portion
2 Brush head
3 Switch portion
4 Cleaning element
5 Battery
6 Handle housing
7 Connecting rod mechanism
8 Circuit board
10 Motor
11 Drive shaft
12 Drive shaft connection rod
13 Drive shaft eccentric rod
14 Connecting rod
15 Driven wheel
16 Driving wheel
17 Driven wheel eccentric rod
18 Second hole
19 First hole
20 Frame
21 Hole portion
22 Boss hole bottom
23 Second boss
24 First boss
25 Boss bottom hole
26 Frame cover
27 Frame bottom wall
28 First boss wall
29 Frame outer wall
30 First boss cavity 100 Electric toothbrush
Li Longitudinal axis of drive shaft
L₂ Longitudinal axis of output shaft
O Center of drive shaft
A Center of first hole of connecting rod
B Center of second hole of connecting rod
C Center of rotation of driven wheel

## Claims

1. A cleaning and caring appliance, comprising:
a housing (1), in which a chamber is formed;
a motor (10), which includes an output shaft having a first axis, the output shaft performing a rotational motion, and the motor being arranged in the chamber;
a drive shaft (11), which has a second axis and extends out of the chamber; and
a connecting rod mechanism, which is connected to both the output shaft and the drive shaft and is configured to convert the rotational motion of the output shaft around the first axis into reciprocating rotation of the drive shaft around the second axis;
wherein the cleaning and caring appliance comprises a frame (20), the frame (20) being arranged adjacent to the motor (10) in the housing, the frame (20) includes a frame bottom wall and a first boss (24) and a second boss (23) which protrude from the frame bottom wall, at least part of the output shaft being accommodated in a first boss cavity (30) formed by the first boss (24), the second boss (23) being provided with a hole portion (21), the drive shaft (11) being accommodated in the hole portion (21) to perform the reciprocating rotation, and the second boss (23) being overlapped above the first boss (24) such that the hole portion (21) is located above the first boss cavity (30).

2. The cleaning and caring appliance according to claim 1, wherein the second boss (23) is overlapped above the first boss (24), such that the first axis of the output shaft is substantially aligned with the second axis of the drive shaft.

3. The cleaning and caring appliance according to claim 1, wherein a boss hole bottom (22) is provided between the first boss and the second boss, the boss hole bottom (22) abuts against an end of the drive shaft (11), and the boss hole bottom (22) is integrally formed with at least one of the first boss (24) and the second boss (23).

4. The cleaning and caring appliance according to claim 1, wherein
a driving wheel is provided on the output shaft of the motor (10), and at least part of the driving wheel is accommodated in the first boss cavity; and
the connecting rod mechanism further comprises:
a driven wheel (15) being in gear engagement with the driving wheel;
a driven wheel eccentric rod (17) connected to the driven wheel, with a central axis of the driven wheel eccentric rod being eccentrically arranged relative to an axis of rotation of the driven wheel;
a connecting rod (14), which has one end connected to the driven wheel eccentric rod (17);
a drive shaft eccentric rod (13) connected to the other end of the connecting rod; and
a drive shaft connection rod (12), which has one end connected to the drive shaft eccentric rod (13) and the other end fixed to the drive shaft.

5. The cleaning and caring appliance according to claim 4, wherein the first boss comprises a first boss wall circumferentially surrounding the driving wheel, the first boss wall including a notch portion where the driven wheel engages with the driving wheel.

6. The cleaning and caring appliance according to claim 4, wherein the other end of the drive shaft connection rod (12) is fixed to the drive shaft above the second boss.

7. The cleaning and caring appliance according to claim 4, wherein the frame further comprises a frame outer wall which extends from and is integrally formed with the frame bottom wall and surrounds the connecting rod mechanism, and
wherein the frame bottom wall is provided with a first opening between the first boss and the frame outer wall, and the first opening accommodates one end of the driven wheel eccentric rod (17).

8. The cleaning and caring appliance according to claim 7, wherein the frame further comprises a frame cover fixed to the frame outer wall at an end opposite to the frame bottom wall, the frame cover being provided with a second opening in which the other end of the driven wheel eccentric rod (17) is accommodated.

9. The cleaning and caring appliance according to claim 1, wherein the second boss is formed separately from the first boss, and the second boss is snap-fitted onto the first boss.

10. The cleaning and caring appliance according to claim 1, wherein the frame bottom wall is provided with a boss bottom hole (25) on one side of the first boss close to the motor, and the output shaft of the motor extends into the first boss cavity (30) through the boss bottom hole.
